(19) Europäisches Patentamt
European Patent Office
Office européen des brevets

(11) **EP 1 085 429 A1**

(12) **EUROPEAN PATENT APPLICATION**

(43) Date of publication:
21.03.2001 Bulletin 2001/12

(51) Int. Cl.⁷: **G06F 17/30**

(21) Application number: **00307286.5**

(22) Date of filing: **24.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.09.1999 GB 9922221**

(71) Applicant:
**NCR International, Inc.**
**Dayton, Ohio 45479 (US)**

(72) Inventor: **Hoggart, Clive**
**London SW12 8LL (GB)**

(74) Representative:
**Cleary, Fidelma et al**
**International IP Department**
**NCR Limited**
**206 Marylebone Road**
**London NW1 6LY (GB)**

(54) **Classifying data in a database**

(57) The present invention relates to a method and apparatus for local Bayesian classification and regression. In a first step, a joint estimate is made of the density in the covariate and response variables constituting multivariate normal distributions. Subsequently responses are sampled from the estimate and finally an arbitrary transformation is performed on latent parameters of a k-dimensional distribution, where each dimension is defined on a real line (i.e $-\infty$ to $+\infty$) and where k is an integer greater than or equal to 2.

The invention offers extremely flexible ways of modelling data and is capable of dealing with a highly varied customer base that does not follow a global trend. It is unaffected by outliers, such as errors in the data or small groups of customers displaying unusual behaviour. It can also deal elegantly with missing values in the data. An important technical contribution of the invention is that it allows inferences to be reversed from a given behaviour to demographic descriptions of customers that perform that behaviour. In other words it can provide a previously unobtainable executive summary describing the factors that drive customer behaviour.

**FIG. 3**

START — 30

INITIALIZE ALGORITHM BY CLUSTERING CUSTOMERS — 31

ESTIMATE PARAMETERS OF NORMAL DISTRIBUTIONS — 32

RE-ASSIGN CUSTOMERS TO NORMAL DISTRIBUTIONS — 33

SAMPLE PARAMETERS OF NORMAL DISTRIBUTIONS — 34

35 — SAMPLE FOR LATENT VARIABLES → TRANSFORMATION — 39

36 — SAMPLE FOR MISSING VALUES

CALCULATE EXPECTED PROPENSITY FOR CUSTOMERS — 37

NO — CONVERGENCE ? — YES → STOP

38

EP 1 085 429 A1

Printed by Xerox (UK) Business Services
2.16.7 (HRS)/3.6

**Description**

The present invention relates to a method and apparatus for local Bayesian classification and regression.

All predictive modelling is based on the idea that similar people will behave in a similar way. This means that a bank with a data warehouse that has information about who bought and did not buy a certain product can find neighbourhoods in the data space that are likely prospects for a sale. Broadly speaking there are two ways of approaching the problem of prediction: global methods and local methods. Almost all models currently in use for propensity modelling are global models. These include neural networks, linear regression and logistic regression. These and other examples are listed in Table 1. There are Bayesian versions of all of them, however, among Bayesian statisticians there has been a recent growth of interest in local models. This is because they seem to offer a more flexible and possibly more accurate way of approaching data modelling.

| Global Models | Local Models |
|---|---|
| Linear regression | Nearest neighbour |
| Logistic regression | Local polynomial regression |
| Back-propagation neural networks | Multivariate Adaptive Regression Splines (MARS) |
| | Decision trees (CART and C5.0) |

**Table 1.** *A list of local and global models.*

In a global model, as the name suggests, an assumption is made about how the data is distributed as a whole and so global modelling is a search for global trends. Local models are not concerned at all with global trends. Instead they care about small neighbourhoods of similar customers. By looking after many local neighbourhoods of similar customers local models can build up global trends in a piecemeal fashion. The simplest example of a local model is the nearest neighbour algorithm. This model is so simple that it takes only a few lines of code to implement. It looks like this:

Find most similar customer
Behaviour is the same as that customer

The nearest neighbour algorithm only cares about the most similar customer's behaviour. There is no mention of all the other customers who are not similar to the customer for which we are making the prediction. This is the hallmark of local models.

An example of a global model is logistic regression. In this model, a line is drawn through the space of customer information to classify customers in relation to whether they will or will not buy a particular product. Everyone who lies on one side of the line is not going to buy and everyone on the other side of the line will buy. This line is also called a partition, because it splits the input space in which the customers lie into segments. In a global back-propagation neural network the customer data space is first warped to a new space and then a line is drawn in the new space to separate customers who buy from those that do not. That is, global models use a global trend to fit customer behaviour and assume that all customers will follow this trend. This can cause problems.

The first problem is that all customers may not follow the global trend. Some sub-populations of customers may differ radically from others. So in an attempt to stay with a global model, it is necessary to make the global trend more complicated at greater computational cost. In a neural network, for example, it is possible to add more neurons to the network to make the data partitions more convoluted. But this slows down the modelling process, and knowing just how many neurons to add is complex.

Another problem with global models is outliers. If some of the data in the warehouse is incorrect, or just unusual, a global model will still blindly try to fit that data with a global trend. This means that the core customer data that really should fit the global trend will be compromised by having to accommodate the few outlying data points. A whole branch of statistics is devoted to patching up global models to get around the problem of outliers.

If a lot of customers really are outliers, unless the global model is made very complex it will predict poorly. One solution is to use a very powerful model such as a back-propagation neural net, with very many hidden units. However, such models are very slow and fit clusters of outliers poorly if they have few members. It is also difficult to interrogate a neural network to get a feel for how customers behave in terms a human can understand.

It has already been suggested to use a Bayesian local model for classification and regression based on mixtures of multivariate normal distributions. Each multivariate normal distribution in the model represents a cluster to which customers belong with a given probability. A result of using the multivariate normal distribution is that the target variable follows a linear trend, that is, we have linear regression within each cluster.

Underlying the previous approach is a joint model of the input and output variables. The model uses a finite mixture of multivariate normal distributions of dimension $d + 1$, where $d$ is the number of input variables. This model leads to the conditional distribution $(y|x)$ being a finite mixture of univariate normal distributions, say $N(y|\tilde{\mu}_j, \tilde{\lambda}_j)$, with weights proportional to the likelihood of $x$ coming from the corresponding marginal multivariate normal distribution, for example, $N_d(x|\tilde{\mu}_j, \tilde{\lambda}_j)$. Formally this can be expressed as

$$(x,y) \sim \Sigma_j N_{d+1}(x,y|\mu j, \lambda j) = \Sigma_j p_j(x,y)$$
$$= \Sigma_j p_j(y|x)p_j(x)$$
$$= \Sigma_j p_j(x)N(y|\tilde{\mu}_j, \tilde{\lambda}_j)$$

This is the same as local linear regression which can be expressed mathematically as $E(y|x) = \Sigma_j s_j(x)m_j(x)$ where $m_j(x)$ denote distinct linear functions of $x$ and $s_j(x)$ denote probability weights that vary across the sample space $x$. A limitation of the previously suggested model is that it can only handle continuous input and target variables.

An object of the present invention is to deal with discrete and categorical input and output data.

According to the present invention, there is now provided a method of classifying discrete data in a database comprising the steps of;

jointly estimating the density in the covariate and response variables constituting multivariate normal distributions, sampling responses from the estimate, and

performing an arbitrary transformation on latent parameters of a k-dimensional distribution, where each dimension is defined on a real line (i.e - ∞ to + ∞) and where k is an integer greater than or equal to 2.

Further according to the present invention, there is provided data processing apparatus for classifying discrete data in a database the apparatus comprising;

means for jointly estimating the density in the covariate and response variables constituting multivariate normal distributions,
sampling means for sampling responses from the estimate, and
transformation means for performing an arbitrary transformation on latent parameters of a k-dimensional distribution, where each dimension is defined on a real line (i.e - ∞ to + ∞) and where k is an integer greater than or equal to 2.

Yet further, according to the present invention, there is provided a computer program adapted for programming data processing apparatus to classify discrete data in a database the program comprising;

instructions for jointly estimating the density in the covariate and response variables constituting multivariate normal distributions,
instructions for sampling responses from the estimate, and
instructions for performing an arbitrary transformation on latent parameters of a k-dimensional distribution, where each dimension is defined on a real line (i.e - ∞ to + ∞) and where k is an integer greater than or equal to 2.

The invention will be further described, by way of example, with reference to the accompanying drawings in which;

Figure 1 shows a database relating to a set of customers of a bank,
Figure 2 shows data processing apparatus, according to the present invention, for implementing the method of the invention, and
Figure 3 shows a block diagram of the operating steps in a method, according to the present invention, which employs the apparatus of Figure 3.

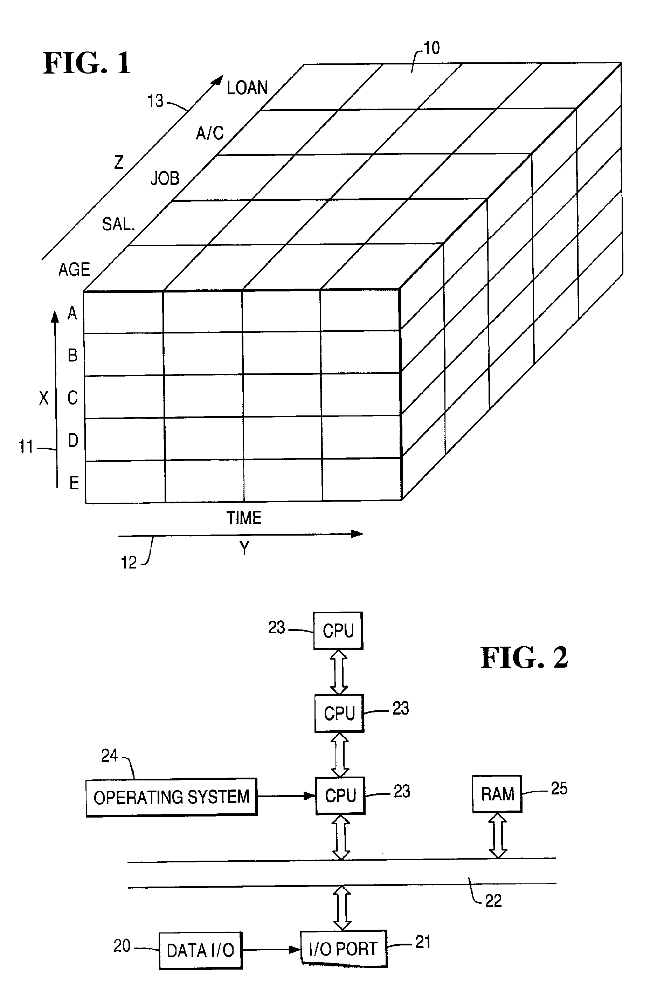

In Figure 1, a database of information 10 concerns a set of customers of an enterprise such a bank. The database 10 is shown in three dimensions arranged along an X axis 11, a Y axis 12 and a Z axis 13. The X axis 11 is subdivided to include fields for each of five customers A to E although it will be understood that in practice the database would have fields along the X axis for a multiplicity of customers far in excess of five. Each customer has attributes which include personal information such as age, type of job and salary and financial attributes such as the number and types of bank accounts, including investment accounts, deposit and current accounts and loans. The customer attributes are arranged along the Z axis 13. Whilst only five fields of attributes for each customer are illustrated in Figure 1, it will be understood that, in practice, provision would be made in the database to include a number of attributes for each customer far in excess of five.

The Y axis 12 of the database 10 is a time axis. Each customer attribute is recorded for each of a regular succession of time intervals. The time intervals can conveniently be intervals of one month although intervals other than monthly intervals can be used.

In Figure 2 is shown a data processing apparatus which provides a means for receiving the data in the database 10 of Figure 1 and for predicting the behaviour of the customers in the database thereby to enable the targeted marketing of products to customers judged most likely to buy the products.

The data is entered by means of an I/O device 20 through an I/O port 21 for entry to a data bus 22. A group of central processing units (CPU's) 23 are controlled by an operating system 24 to control the entry of data onto the data bus. A random access memory 25 is connected to the I/O bus 22 to receive and store data supplied by the bus 22.

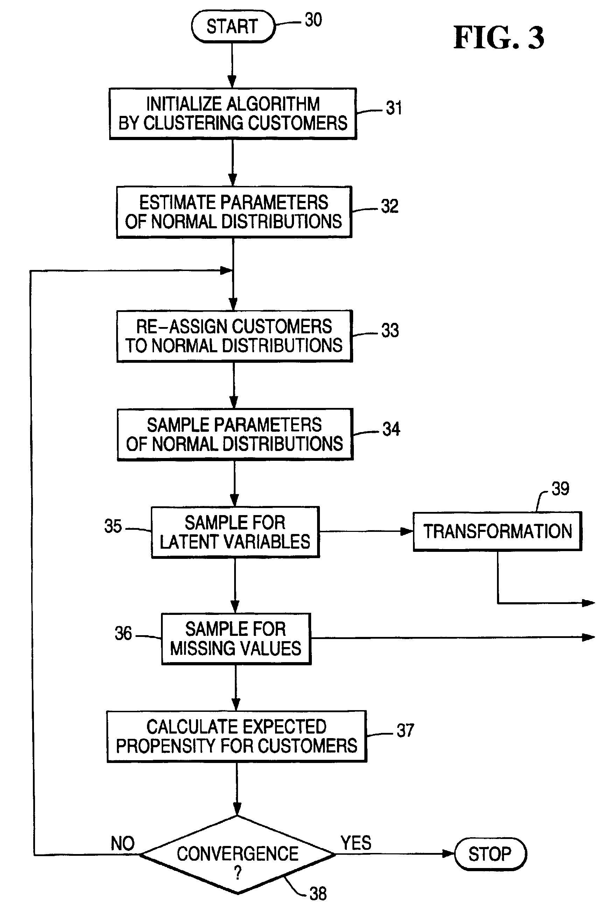

In response to the entry, by means of the data I/O device 20, of the data representing the information in the different fields of the database 10 of Figure 1, the parallel operating CPUs are programmed to enter the data into the memory 25. The data in the memory 25 is a set of reference data sequences. The CPUs are programmed by computer programming, according to the present invention, to process the data sequences in steps represented in the block flow diagram of Figure 3.

Preparatory to discussing the block flow diagram of Figure 3, it will be helpful to discuss the mathematical basis on which the processing operations of the invention proceed. A mixture of multivariate normal distributions is constructed to model the joint distribution of the input and target variables using the Dirichlet process mixtures of normals model. This is a Bayesian non-parametric model that enables a very flexible model of the joint distribution of $(x, y)$ to be fitted. Bayesian non-parametric models construct distributions on larger spaces than standard parametric models. They thus provide support for more eventualities such as multimodal or skewed distributions. In the following section we describe the basic Dirichlet mixtures of normals model.

The model assumes that the observed data vectors $z_i$ are conditionally independent and sampled jointly from a multivariate normal distribution, $z_i|\pi_i \sim N_d(z_i|\mu_i, \lambda_i)$, where $d$ is the dimension of $z_i$ and $\pi = (\mu, \lambda)$. The parameters of the normal distribution $(\mu_i, \lambda_i)$ are assumed to be sampled from an unknown distribution G, which we model as a Dirichlet process. The Dirichlet process is defined by two parameters, $G_0$, a parametric distribution which determines the prior expectation of G and $\phi$ which expresses our uncertainty about $G_0$. This model can be expressed mathematically as a Bayesian hierarchical model as follows

$$z_i \sim N_d(z_i|\mu_i, \lambda_i) \; i = 1,..., n$$

$$\pi_i \sim G$$

$$G \sim D(\phi \; G_0)$$

Thus, in our model $G_0$ defines the mean location of the $\pi_i$'s. The parameter $\phi$ can be thought of as controlling the variability of G about $G_0$: the smaller $\phi$ the greater the variability about $G_0$.

For convenience we take $G_0$ to be the conjugate prior distribution for the multivariate normal distribution with unknown scale and location. This is the normal Wishart distribution

$$G_0 = N_d(\mu|\mu_0, n_0\lambda) \; Wi_d(\lambda| \alpha, \beta)$$

A key feature of the model is the discreteness of the Dirichlet process. Let us consider the parameter values $(\mu_i, \lambda_i) = \pi_i$ which we assume are drawn from an unknown distribution G to which we assign a Dirichlet process prior distribution. Given a hypothetical sample $\pi$ of size n from G, there is a positive probability of coincident values, that is $\pi_i = \pi_j$, $i \neq j$. This is evident from the conditional prior distribution. Let $\pi_{-i}$ be $\pi$ without $\pi_i$, $\pi_{-i} = (\pi_1,..., \pi_{i-1}, \pi_{i+1},..., \pi_n)$ then the conditional prior distribution of $\pi_i$ is

$$(\pi_i \mid \pi_{-i}) \sim \phi\alpha_{n-1} G_0(\pi_i) + \alpha_{n-1} \sum_{j=1, j\neq i}^{n} \delta_{\pi_j}(\pi_i)$$

where

$$\delta_{\pi_j}$$

$(\pi)$ denotes a unit point mass at $\pi = \pi_j$ and $\alpha_r = 1/(\phi+n)$.
Similarly the distribution of a future parameter $\pi_{n+1}$ is given by

$$(\pi_{n+1} \mid \pi) \sim \phi\alpha_n G_0(\pi_{n+1}) + \alpha_n \sum_{j=1}^{n} \delta_{\pi_j}(\pi_{n+1})$$

Thus, given a sample $\pi$ of size $n$ from $G$, $\pi_{n+1}$ will take a new distinct value with probability $\phi\alpha_n$ and will otherwise take a coincident value $\pi_i$ with probability $\alpha_n$.

The values taken by $\pi_1,..., \pi_n$ will, with positive probability, reduce to $k < n$ distinct values. Denote the $k$ distinct values of $\pi$ by $\pi^* = (\mu^*, \lambda^*)$. Let $n_j$ denote the number of $\pi_i$'s taking the value $\pi_j^*$. The full conditional prior distribution of $\pi_{n+1}$ will thus reduce to the following mixture of fewer components

$$(\pi_{n+1} \mid \pi) \sim \phi\alpha_n G_0(\pi_{n+1}) + \alpha_n \sum_{j=1}^{k} n_j \delta_{\pi_j^*}(\pi_{n+1})$$

The number of distinct values will increase stochastically with $\phi$. The distinct values can be thought of as cluster centres.

Given the predictive distribution of the unobserved parameters $\pi_{n+1}$, we can evaluate the predictive distribution of the observed data $z_{n+1}$.

$$(z_{n+1} \mid \pi) \sim \int p(z_{n+1} \mid \pi_{n+1}) p(\pi_{n+1} \mid \pi) d\pi_{n+1}$$

The first term in the integrand is the multivariate normal distribution and the second term is given above, thus it follows

$$(z_{n+1} \mid \pi) \sim \phi\alpha_n St_d\left(z_{n+1} \mid \mu_0, \frac{n_0}{1+n_0}(\alpha-\frac{1}{2}(d-1))\beta^{-1}, 2\alpha-d+1\right) + \alpha_n \sum_{j=1}^{k} n_j N_d(z_{n+1} \mid \mu_j^*, \lambda_j^*)$$

Thus, the posterior predictive distribution of $z_{n+1}$ having observed data $D = (z_1,..., z_n)$, can be written as

$$p(z_{n+1} \mid D) \sim \int p(z_{n+1} \mid \pi) p(\pi \mid D) d\pi$$

This integral can be evaluated via a Monte Carlo approximation given draws from the posterior distribution $p(\pi \mid D_n)$ as follows

$$p(z_{n+1} \mid D) \approx \frac{1}{L} \sum_{l=1}^{L} p(z_{n+1} \mid \pi_l)$$

where the $\pi_l$'s are drawn from the posterior distribution

$$\pi_l \sim p(\pi \mid D)$$

In the following section we outline a computational strategy to sample from $p(\pi|D)$.

*Computational strategy*

The posterior distribution can be simulated via the Gibbs sampler algorithm. To implement the Gibbs sampler algorithm the full conditional distributions must be identified. The full conditional distribution for $\pi_i$ is given by

$$(\pi_i \mid \pi_{-i}, x_i) \sim q_0 \, G_i(\pi_i) + \sum_{j=1, j \neq i}^{k} q_j \delta_{\pi_j}(\pi_i)$$

where $G_i(\pi_i)$ is the posterior distribution of $\pi_i$ given the observation $x_i$ and the prior distribution $G_0$. Thus $G_i(\pi_i)$ is given by the following normal Wishart distribution

$$G_i(\pi_i) \sim N_d\left(\mu_i \mid \frac{x_i + n_0\mu_0}{1+n_0}, \lambda_i(1+n_0)\right) Wi_d\left(\lambda_i \mid \alpha + \frac{1}{2}, \beta + \frac{n_0}{2(1+n_0)}(\mu_0 - x_i)(\mu_0 - x_i)^t\right)$$

The weights $q_j$ are defined as follows

$$q_0 \propto \phi \frac{\Gamma\left(\frac{1}{2}(\gamma' + d)\right)}{\Gamma\left(\frac{1}{2}\gamma'\right)(\gamma')^{d/2}} |\beta'|^{1/2} \left[1 + \frac{1}{\gamma'}(x_i - \mu_0)' \beta'(x_i - \mu_0)\right]^{-(\gamma'+d)/2}$$

$$q_j \propto n_j \frac{|\lambda_j^*|^{1/2}}{2^{d/2}} \exp\left\{-\frac{1}{2}(x_i - \mu_j^*)' \lambda_j^*(x_i - \mu_j^*)\right\},$$

where

$$\beta' = \frac{n_0}{1+n_0}\left(\alpha - \frac{1}{2}(d-1)\right)\beta^{-1}$$

$$\gamma' = 2\gamma - d + 1$$

Where the parameters $\alpha$, $\beta$, $\gamma$ and $n_0$ are the parameters of the base prior, $G_0$, defined earlier.

The weight $q_0$ is proportional to $\phi$ times prior predictive density under the prior $G_0$ evaluated at $x_i$ and the weights $q_j$ are proportional to $n_j$ times the likelihood of $N(.| \mu_j^*, \lambda_j^*)$ evaluated at $x_i$. The prior predictive distribution is defined as

$$\begin{aligned}p(x) &= \int N_d(x|\mu, \lambda) G_0(\pi) d\mu \, d\lambda \\ &= \int N_d(x|\mu, \lambda) N_d(\mu|\mu_0, n_0\lambda) Wi_d(\lambda|\alpha, \beta) d\mu \, d\lambda \\ &= St_d(x|\mu_0, \beta', \gamma')\end{aligned}$$

Here is the Gibbs sampler in algorithm form:

Step 1: Choose starting values for $\pi = (\pi_1, ..., \pi_n)$; reasonable starting values can be obtained by taking samples from the individual conditional posteriors $G_i(\cdot)$.

Step 2: Sample sequentially from $(\pi_1 \mid \pi_{-1}, D)$, $(\pi_2 \mid \pi_{-2}, D)$ up to $(\pi_n \mid \pi_{-n}, D)$.

Step 3: Return to 2 until convergence.

The parameters of our prior distribution $G_0$ can be learnt about through the data $D$. This involves assigning the parameters prior distributions and including draws from their full conditional distributions in the Gibbs sequence described above. This model gives greater modelling flexibility with little added computational expense.

*Regression function estimation*

A continuous regression function $E(y \mid x)$ is estimated. As outlined at the start of this section the input space, $x$, and the output space, $y$, are modelled jointly as a Dirichlet process mixture of multivariate normal distributions following the methodology already described. Since $y$ is univariate and if $x$ is a vector of length $k$, that is, we have $k$ input variables, the multivariate normal distributions will be of dimension $k +1$. Recall that the Gibbs sampler was used to simulate from the posterior distribution of the unknown parameters $\pi$. At each sweep of this Gibbs sampler the values of the $\pi^*$'s and the allocations of the $\pi$'s to the $\pi^*$'s is known. Given these values it is straightforward to show that the conditional distribution of an unknown response, $y_{n+1}$, given input variables, $x_{n+1}$, is given by

$$(y_{n+1} \mid x_{n+1}, \pi) \sim q_0(x_{n+1})f_0(y_{n+1} \mid x_{n+1}) + \sum_{j=1}^{k} q_j(x_{n+1})f_j(y_{n+1} \mid x_{n+1}, \pi_j^*)$$

where $f_0$ is the conditional prior predictive distribution of $y_{n+1}$ given $x_{n+1}$ under the prior distribution $G_0$ and $f_j$ is the conditional normal distribution of $y_{n+1}$ given $x_{n+1}$ under the joint model

$$N_{d+1}(x_{n+1}, y_{n+1} \mid \mu_j^*, \lambda_j^*).$$

The weights $q_0$ and $q_j$ are similar to those defined for the basic Dirichlet mixture of normals model except that the weights are conditioned on $x_{n+1}$ and represent the probability that $x_{n+1}$ is from the prior predictive distribution under the prior distribution $G_0$ and the joint model

$$N_{d+1}(x_{n+1}, y_{n+1} \mid \mu_j^*, \lambda_j^*)$$

respectively.

The expectation of the regression function can be evaluated at each iteration of the Gibbs sampler as

$$E(y|x) = \sum_{j=0}^{k} q_j(x)m_j(x)$$

where $m_j(x)$ is the mean of the $j$-th component distribution for $y$ given $x$. For both the Student and normal distribution $m_j(x)$ is a linear function of $x$. The closer $x$ is to the $j$-th component the greater the weight $q_j$, giving higher weight to the prediction from cluster $j$ when $x$ is in a region 'close' to cluster $j$.

The average of these conditional expectations evaluated at each sweep of the Gibbs sampler approximates the required regression estimate. Uncertainty about the regression can be approximated similarly via the evaluation of the variance at each iteration.

*Classification function estimation*

In the classification model the response $y$ takes values 0 and 1 and obviously cannot be modelled as mixture of normal distributions as before. The response should be modelled as a Bernoulli distribution with parameter $\theta$ which is defined as

$$Br(y \mid \theta) = \theta^{y}(1 - \theta)^{1-y}$$

where $\theta$ represents the probability of response. Note that $\theta$ is not observed and is a latent variable. The idea is to model the parameter $\theta$ with the input space as a multivariate mixture of normal distributions. However, $\theta$ takes values in the range [0,1] and cannot be sensibly modelled by the normal distribution. The following transformation maps $\theta$ onto the range $(-\infty, \infty)$

$$\psi = \log\left(\frac{\theta}{1-\theta}\right)$$

This is the logit transformation. We can model $\psi$ with the input space $x$ as a Dirichlet mixture of normals in the following hierarchical model:

$$(y_i|\psi_i) \sim Br(y_i \mid \theta_i)$$

$$(x_i, \psi_i \mid \mu_i, \lambda_i) \sim N_{d+1}(\psi_i, x_i \mid \mu_i, \lambda_i)$$

$$\pi_i \sim G$$

$$G \sim D(\phi G_0)$$

As before the conditional distribution of logit $\theta_{n+1}$ given input variables, $x_{n+1}$, conditional on $\pi^*$ and the allocations is given by

$$p(\psi_{n+1} \mid x_{n+1}, \pi) \sim q_0(x_{n+1})f_0(\psi_{n+1}|x_{n+1}) + \sum_{j=1}^{k} q_j(x_{n+1})f_j(\psi_{n+1}|x_{n+1},\pi_j^*)$$

where $q_0, q_j, f_o$ and $f_j$ take the same form as in the regression example described above.

Thus, this model fits a linear regression model on $\psi_{n+1}$ within each cluster which is equivalent to a logistic regression on $y_{n+1}$ in each cluster.

The corresponding classification probability is given by

$$p(y_{n+1}=1|x_{n+1},\pi)= E(\theta)$$

$$= \int \theta_{n+1}\left\{q_0(x_{n+1})f_0(\psi_{n+1}|x_{n+1})+\sum_{j=1}^{k} q_j(x_{n+1})f_j(\psi_{n+1}|x_{n+1}, \pi_j^*)\right\}d\psi_{n+1} \quad \text{The } k+1 \text{ integrals}$$

$$= \int \frac{e^{\psi}}{1+e^{\psi}}\left\{q_0(x_{n+1})f_0(\psi_{n+1}|x_{n+1})+\sum_{j=1}^{k} q_j(x_{n+1})f_j(\psi_{n+1}|x_{n+1}, \pi_j^*)\right\}d\psi_{n+1}$$

in the above equation cannot be evaluated analytically, however Simpson's approximation works well in one dimension and can be used as an approximation method.

The values of $\psi$ are unknown and must be integrated out by sampling for them in our Gibbs sequence. Given an allocation of customer $i$ to cluster $j$ we have

$$(x_i, \psi_i) \sim N_{k+1}(x_i, \psi_i \mid \mu_j^*, \lambda_j^*)$$

If we partition $(x_i, \psi_i)$ into $x_i$ and $\psi_i$ the corresponding partitions of $\mu_j^*$ and $\lambda_j^*$ are

$$\mu_j^* = \begin{pmatrix} \mu_1^* \\ \mu_2^* \end{pmatrix}, \qquad \lambda_j^* = \begin{pmatrix} \lambda_{11}^* & \lambda_{12}^* \\ \lambda_{21}^* & \lambda_{22}^* \end{pmatrix}$$

then the conditional density of $\psi_i$ given $x_i$ is univariate normal with mean and precision given respectively by

$$\xi^* = \mu_1^* - \lambda_{12}^*(x_i - \mu_1^*)/\lambda_{11}^*, \lambda_{11}^*$$

The full conditional density of $\psi_i$ which we are required to sample from is given by

$$p(\psi_i \mid y_i, \mu_j^*, \lambda_j^*, s_i = j) \propto p(y_i \mid \psi_i) p(\psi_i \mid \mu_j^*, \lambda_j^*, s_i = j)$$

$$\propto \left(\frac{1}{1+e^{\psi_i}}\right)^{1-y_i} \left(\frac{e^{\psi_i}}{1+e^{\psi_i}}\right)^{y_i} \exp\left\{-\frac{\lambda_j^*}{2}(\psi_i - \xi^*)^2\right\}$$

It is straightforward to sample from this density via rejection sampling.

*Extending to discrete input variables*

The idea of introducing latent variables to model discrete target variables can be simply extended to model discrete explanatory variables. A general classification model is outlined with $n$ continuous explanatory variables $x$, one discrete explanatory variable which we denote by $x'$ and a binary response $y$. Thus the model is given by the following hierarchical structure

$$(y_i \mid \psi_i) \sim Br(y_i \mid \theta_i), (x_i' \mid \xi_i) \sim f(x_i' \mid \zeta_i)$$

$$(x_i, \psi_i, \xi_i \mid \mu_i, \lambda_i) \sim N_{d+2}(x_i \psi_i, \xi, \mid \mu_i, \lambda_i)$$

$$\pi_i \sim G$$

$$G \sim D(\phi G_0)$$

where $f$ is a discrete probability distribution and $\xi_i$ is a transformation of $\zeta_i$ such that $\xi_i$ takes values in the range $(-\infty, \infty)$. In the case of the binary response, described previously, $f$ was the Bernoulli distribution and the parameter of the Bernoulli distribution was transformed by the logit transformation. We can use exactly the same idea for a binary input variable. If $x'$ is count data, a sensible choice for $f$ would be the Poisson distribution. The parameter of the Poisson distribution, $\zeta_i$, takes values in the range $(0, \infty)$. If we take the transformation $\xi = \log \zeta$, then $\xi$ will take values in the range $(-\infty, \infty)$ as required.

To make a prediction for a new customer with attributes given by $x$, we use the following method. At each iteration of the sampler, $x$ will fall into one of the groups and associated with that is a value of $\theta$. For the $i$-th group this value is

$$\theta_i = \frac{\alpha + n_{i1}}{\alpha + \beta + n_i}.$$

We define $\theta^{(1)}, ..., \theta^{(N)}$ to be the samples of $\theta$ for that value of $x$. Then, the prediction for the propensity for $x$ is

$$p(\theta \mid x) = \frac{1}{N} \sum_{i=1}^{N} \theta_i$$

The multivariate normal distribution of dimension $k$ is defined as

$$N_k(x \mid \mu, \lambda) = \frac{|\lambda|^{1/2}}{(2\pi)^{k/2}} \exp\{-\frac{1}{2}(x - \mu)^t \lambda (x - \mu)\}$$

The multivariate Student-t distribution of dimension $k$ is defined as

$$St_k(x|\mu,\lambda,\gamma) = \frac{\Gamma((\gamma+k)/2)}{\Gamma(\gamma/2)(\gamma\pi)^{k/2}} |\lambda|^{1/2} [1+\frac{1}{\gamma}(x-\mu)^t\lambda(x-\mu)]^{-(\gamma+k)/2}$$

The Wishart distribution of dimension $k$ is defined as

$$Wi_k(x|\alpha,\beta) = \pi^{k(k-1)/4} \prod_{i=1}^{k} \Gamma\left(\frac{2\alpha+1-i}{2}\right)|x|^{\alpha-(k+1)/2} \exp\{-tr(\beta x)\}$$

Referring now to Figure 3, there is shown a series of data processing steps starting from a start step 30 and passing to the next step 31 in which the data in the data base of Figure 1 is initialised by means of a clustering algorithm to form clusters of customers. Any of a number of suitable known algorithms may be used for the purpose of step 31. The clusters formed in the step 31 are normal distributions. The following step 32 includes estimating the parameters of the normal distributions by the mean and variance/covariance of the customer attributes assigned to each cluster.

Step 33 is the first of a series of steps in an iterative sequence. In step 33, the result of each iteration is used to reassign customers to an existing normal distribution or to a new normal distribution. Step 34 is a sampling step to sample the parameters of the normal distributions conditioned on the customers assigned to them. Continuing in the iterative sequence, step 35 is a sampling step for latent values and step 36 is a sampling step for missing values. In step 37 a calculation is made of the expected propensity of customers of interest and in step 38 a test is made to determine whether the iterative sequence has reached convergence. If no the iteration is continued back to step 33 and if yes the iterative sequence is stopped.

Reverting now to step 35, the output from this step leads to a step 39 in which a logit transformation is performed on a latent parameter θ representing the probability of response, so as to model the latent parameter as a multivariate mixture of normal distributions. The transformation is performed as already explained in relation to the mathematical basis for the invention.

As already explained, since we are modelling the input space, missing values are straightforward to impute and sampling for the missing values is performed in step 36.

The invention can be extended to model the time to an event (referred to in statistics as survival analysis) using the exponential distribution. The parameter of the exponential distribution takes values on the real line. The log transformation of this parameter could be modelled jointly with the input data as a Dirichlet mixture of multivariate normal distributions in the framework described.

What has been described is a method and apparatus offering extremely flexible ways of modelling data and capable of dealing with a highly varied customer base that does not follow a global trend. It is unaffected by outliers, such as errors in the data or small groups of customers displaying unusual behaviour. It can also deal elegantly with missing values in the data. An important technical contribution of the invention is that it allows inferences to be reversed from a given behaviour to demographic descriptions of customers that perform that behaviour. In other words it can provide a previously unobtainable executive summary describing the factors that drive customer behaviour.

## Claims

1.    A method of classifying discrete data in a database comprising the steps of;

    jointly estimating the density in the covariate and response variables constituting multivariate normal distributions,
    sampling responses from the estimate, and
    performing an arbitrary transformation on latent parameters of a k-dimensional distribution, where each dimension is defined on a real line (i.e - ∞ to + ∞) and where k is an integer greater than or equal to 2.

2.    A method as claimed in claim 1, in which the step of jointly estimating the density in the covariate and response variables constituting multivariate normal distributions uses the Dirichlet process mixtures of normals model.

3.    A method as claimed in claim 1 or 2, in which the step of performing an arbitrary transformation comprises performing a logit transformation on a latent parameter representing the probability of response, so as to model the latent parameter as a multivariate mixture of normal distributions

4.    A method as claimed in claim 3, wherein the logit transformation is performed on a parameter of a Bernoulli distribution which models the response.

5. A method as claimed in claim 1 or 2, in which the step of performing an arbitrary transformation comprises performing a log transformation on a parameter of a Poisson distribution which models the response.

6. A method as claimed in any one of the preceding claims in which the data is representative of the attributes of customers of a business organisation.

7. Data processing apparatus for classifying discrete data in a database the apparatus comprising;

estimating means for jointly estimating the density in the covariate and response variables constituting multivariate normal distributions,
sampling means for sampling responses from the estimate, and
transformation means for performing an arbitrary transformation on latent parameters of a k-dimensional distribution, where each dimension is defined on a real line (i.e - ∞ to + ∞) and where k is an integer greater than or equal to 2.

8. Data processing apparatus as claimed in claim 7, wherein the estimating means uses the Dirichlet process mixtures of normals model.

9. Data processing apparatus as claimed in claim 7 or 8 wherein the transformation means performs a logit transformation on a latent parameter representing the probability of response, so as to model the latent parameter as a multivariate mixture of normal distributions.

10. Data processing apparatus as claimed in claim 9, wherein the logit transformation is performed on a parameter of a Bernoulli distribution which models the response.

11. Data processing apparatus as claimed in claim 7 or 8, wherein the transformation means performs a log transformation on a parameter of a Poisson distribution which models the response.

12. Data processing apparatus as claimed in any of claims 7 to 11, comprising a store of the data in the form of attributes of customers of a business organisation.

13. A computer program adapted for programming data processing apparatus to classify discrete data in a database the program comprising;

instructions for jointly estimating the density in the covariate and response variables constituting multivariate normal distributions,
instructions for sampling responses from the estimate, and
instructions for performing an arbitrary transformation on latent parameters of a k-dimensional distribution, where each dimension is defined on a real line (i.e - ∞ to + ∞) and where k is an integer greater than or equal to 2.

14. A method of classifying discrete data in a database, the method being substantially as hereinbefore described with reference to the accompanying drawings.

15. Data processing apparatus for classifying discrete data in a database, the apparatus being substantially as hereinbefore described with reference to the accompanying drawings.

**FIG. 1**

**FIG. 2**

**FIG. 3**

START — 30

↓

INITIALIZE ALGORITHM
BY CLUSTERING CUSTOMERS — 31

↓

ESTIMATE PARAMETERS
OF NORMAL DISTRIBUTIONS — 32

↓

RE-ASSIGN CUSTOMERS
TO NORMAL DISTRIBUTIONS — 33

↓

SAMPLE PARAMETERS
OF NORMAL DISTRIBUTIONS — 34

↓

35 — SAMPLE FOR
LATENT VARIABLES → TRANSFORMATION — 39

↓

36 — SAMPLE FOR
MISSING VALUES

↓

CALCULATE EXPECTED
PROPENSITY FOR CUSTOMERS — 37

↓

NO — CONVERGENCE
? — 38 — YES → STOP

13

**European Patent Office**

# EUROPEAN SEARCH REPORT

**Application Number**

EP 00 30 7286

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHANG J K ET AL: "NEW MULTICLASS CLASSIFICATION METHOD: MODIFIED MAXIMUM LIKELIHOOD DECISION RULE" 1ST. INT. JOINT CONF. ON PATTERN RECOGNITION, 30 October 1973 (1973-10-30) - 1 November 1973 (1973-11-01), pages 334-339, XP000971224 Washington DC, USA * page 334, left-hand column, line 1 - page 336, left-hand column, line 29 * | 1,7, 13-15 | G06F17/30 |
| A | KLEITER G D: "THE PRECISION OF BAYESIAN CLASSIFICATION: THE MULTIVARIATE NORMAL CASE" INTERNATIONAL JOURNAL OF GENERAL SYSTEMS,GORDON AND BREACH SCIENCE, NEW YORK, NY,US, vol. 22, no. 2, 1994, pages 139-157, XP000974442 ISSN: 0308-1079 * page 139, line 1 - page 141, line 10 * | 1,7, 13-15 | |

**TECHNICAL FIELDS SEARCHED (Int.Cl.7)**

G06F

The present search report has been drawn up for all claims

| Place of search | Date of completion of the search | Examiner |
|---|---|---|
| BERLIN | 2 January 2001 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)